# EUROPEAN PATENT APPLICATION

(11) **EP 2 373 076 A1**
(43) Date of publication of application: **05.10.2011**
(21) Application number: 10290173.3
(22) Date of filing: 01.04.2010
(51) Int. Cl.: H04W 16/08

(54) **Adapting a plurality of parameters in a wireless communication network**

(71) Applicant: Alcatel Lucent, 75008 Paris (FR)
(72) Inventor: Karla, Ingo, 46514 Schermbeck (DE)
(74) Representative: Richardt Patentanwälte

(57) **Abstract**

The invention relates to a method for adapting a plurality of parameters in a first (100) and a second (102) cell of a wireless communication network, wherein the first cell neighbours the second cell, and wherein the method comprises the following steps:
- calculating (200) at least one first updated parameter of the plurality of parameters of the wireless communication network;
- transmitting a first signal (104) from the first cell to the second cell, the first signal being indicative of the at least one first updated parameter;
- determining (302) if the at least one first updated parameter would affect wireless communication in the second cell more than a first threshold value; and
- transmitting a second signal (106; 306; 402) from the second cell to the first cell, the second signal being indicative of whether the second cell accepts using the at least one first updated parameter for wireless communication or not.

## Description

### Field of the invention

The invention relates to a method for adapting a plurality of parameters in a wireless communication network, more specifically to a method for adapting a plurality of parameters, wherein the method is performed in two cells of the wireless communication network.

### Background and related art

In common cellular wireless telecommunication networks a plurality of parameters are used for communication between base stations and wireless terminals. A wireless terminal may be any user equipment such as a PDA, a mobile phone, or a portable computer. A base station may serve one or a plurality of cells of the cellular wireless telecommunication network.

When a transmission parameter is changed in one cell, the change may also have an impact to the cellular wireless telecommunication network in a neighboring cell. A neighboring cell is a second cell, which has a common border with the respective cell, or which is located sufficiently close so that there could be some kind of interaction between these cells.

In other words, only one change of one transmission parameter in one cell could affect the wireless telecommunication in a plurality of cells. This leads to a large computation effort for determining updated parameters.

### Summary of the invention

It is the object of the present invention to provide an improved method for adapting a plurality of parameters of a wireless communication network in a first and a second cell. This object is achieved by a method according to independent claim 1. Embodiments of the invention are given in the dependent claims.

The invention provides for a method for adapting a plurality of parameters in a first and a second cell of a wireless communication network. The first cell neighbors the second cell, which means that the first cell has a common border with the second cell. A common border is not limited to geographic conditions. A neighboring cell may for example be suited for a handover procedure of a user equipment. Another possibility for defining a neighboring cell is to consider it for interference coordination. Each cell, with which interference coordination is coordinated with, may be considered as a neighboring cell. The method comprises the following steps.

In a first step at least one first updated parameter of the plurality of parameters of the wireless communication network is calculated. An updated parameter may be understood herein as a new value for an already existing parameter. Preferably, the updated parameter is adapted for allowing a better communication in the respective cell, where it shall be applied. In other words an updated parameter may also be described as a potentially new value for anyone of the plurality of parameters.

The plurality of parameters may comprise any parameter, which is applied for communication in the wireless communication network.

After having calculated the first updated parameter a first signal is transmitted from the first cell to the second cell. The first signal is indicative of the at least one first updated parameter. Preferably, the at least one first updated parameter is a parameter for wireless communication in the second cell. This means, the first cell has calculated an updated parameter, which shall be applied in the second cell. The first cell may for example have calculated the first updated parameter in order to improve wireless communication in the first cell. An exemplary parameter would for example be a handover parameter for handovers to the second cell or the transmission power of the base station of the second cell or any parameter affecting interferences in the border region between the first and the second cell.

Thus, the first updated parameter would improve wireless communication in the wireless communication network in the vicinity of the first cell when the first updated parameter would be applied in the second cell. The vicinity of the first cell may for example be defined by the neighboring cells of the first cell. It is to be noted that also more cells than only the direct neighbors may be comprised by the vicinity of the first cell. On the other side the first updated parameter may also have an impact to the communication in the second cell and possibly also in the surrounding of the second cell.

This is why it is determined if the at least one first updated parameter would affect wireless communication in the second cell more than a first threshold value. If, for example the first threshold value would be 0.8, a reduction in the communication quality of 20% is still not above the first threshold value. It is to be noted that the first threshold value has not to be one fixed value for each parameter. According to embodiments of the invention the first threshold value is calculated according to a mathematical metric, which may take into account a plurality of variable values for calculating the first threshold value.

Based on the above mentioned determination the second cell decides if the first updated parameter is applied or not. Applying the first updated parameter means that one parameter of the second cell is changed into the updated parameter. In a further step of the method a second signal is transmitted from the second cell to the first cell. The second signal is indicative of whether the second cell agrees to the at least one first updated parameter or not. Agreeing here means accepting the first updated parameter. This method step is not necessarily part of a new algorithm in the base station of the second cell, but may also be part of an algorithm, which is already implemented into the base station of the second cell. For example, the base station of the second cell is adapted to transmit regularly its parameter configuration to the first cell. This message can also be considered as the second signal from the second cell to the first cell.

It is to be noted that the whole method is not only applicable for wireless communication networks but to any network, where a plurality of parameters may be adapted or changed in order to optimize the network or the communication in the network. The method is advantageous in any network, in which a distributed calculation of the parameters is possible.

According to embodiments of the invention the parameters are load balancing parameters or parameters of a self-organizing network. The method is especially advantageous for load balancing parameters because adapting a plurality of load balancing parameters is a complicated task in a cellular wireless telecommunication network. Load balancing parameters may for example be transmission power parameters of base stations, inter-cell interference coordination parameters, and/or handover parameters. When changing a load balancing parameter in one cell this change may also have an impact to one or more neighboring cells. When a plurality of load balancing parameters are possibly changed at the same time this means a high calculation effort for the base station, which wants to change the plurality of load balancing parameters.

Different parameters may be used for load balancing, such as handover parameters, base station transmission (Tx) power, and/or interference coordination parameters. A variation of the base station Tx power shifts the cell border between cells in the case that the system is interference limited and not only power limited. This power variation affects all borders of this cell, i.e. towards all of its neighbouring cells, and thus there is an effect towards more cells in the load balancing actions than e.g. the handover parameters between two cells, which affect via the cell individual offset only the border towards one single cell. Furthermore, changing the Tx power influences the cell coverage situation; there may be the risk to create somewhere a coverage hole when reducing the base station power. This technique has its justification as an additional technique, but for the above reasons, the Tx power should be varied carefully.

There exists an approach to use Tx power variation as the only technique to balance the load between cells by increasing or shrinking the cell size iteratively until the desired traffic load distribution among the cells was achieved. However, this approach is for CDMA cellular networks with a large overlap between the cells due to the spreading code gain, and the load balancing speed of that approach may be too slow for our desired semi-static load balancing.

Inter-cell interference coordination (ICIC) can take place on a very short time scale, e.g. on a milli-seconds time scale, which is often referred to as dynamic ICIC. Basically the scheduler coordinates resources among cells, operates on a TTI level and considers the current radio condition of every single user. Those dynamic approaches require very fast computations and especially a large amount of and very fast signalling information exchange between cells. The scheduler information are exchanged on a TTI time scale across cells.

According to embodiments of the invention the parameters are load balancing parameters or parameters of a self-organizing network. It is to be noted that the method is advantageous for any scenario, where a large amount of parameters is applied.

According to embodiments of the invention the plurality of parameters comprise transmission power parameters, inter-cell interference coordination parameters, and/or handover parameters.

According to embodiments of the invention the second signal is indicative of the second cell agreeing to the at least one first updated parameter. Agreeing to the at least one first updated parameter means accepting the at least one first updated parameter. After having agreed to the at least one first updated parameter the second cell changes at least one parameter of the plurality of parameters into the at least one first updated parameter. In other words, the first cell has told the second cell to change at least one parameter into the at least one first updated parameter. Then, the second cell has determined, if the at least one first updated parameter would affect wireless communication in the second cell more than the first threshold. In this case, the second cell has determined that it accepts the change of at least one parameter to the at least one first updated parameter.

According to embodiments of the invention the second signal is indicative of the second cell not agreeing to the at least one first updated parameter. This means that the determination, if the at least one first updated parameter would affect wireless communication in the second cell more than a first threshold value, has reached the result that the wireless communication in the second cell would be affected more than the first threshold value. Thus, the second cell does not accept the first updated parameter. The first base station has a plurality of alternatives for reacting to such a second signal being indicative of the second cell not agreeing to the first updated parameter. Firstly, the second cell may have transmitted a quality feedback together with the second signal or comprised by the second signal. The quality feedback describes for example how much the first updated parameter would affect wireless communication in the second cell. This indication may for example be made by a value on a scale from 1-10. For example, a value of 8 indicates that the first updated parameter would affect wireless communication in the second cell but it would still be acceptable. A value of for example 2 or 3 would indicate that the first updated parameter would affect communication in the second cell and is not wanted by the second cell. After receiving the second signal the first cell may for example force the second cell to accept the first updated parameter. Another possibility is that the first cell forces the second cell to accept the first updated parameter, only if the quality feedback is below a second threshold. The second threshold may thereby be a fixed value or a value calculated by a mathematical metric. A third possibility would be that the first cell does not decide whether the at least first updated parameter is applied in the second cell, but only the second cell decides about accepting or not accepting the first updated parameter.

According to embodiments of the invention the second signal is indicative of a quality feedback, the quality feedback indicating to the first cell how the at least one first updated parameter would affect wireless communication in the second cell. This is especially advantageous because the first cell knows already how much communication would become better when the at least first updated parameter would be applied in the second cell and by knowing the quality value from the second cell the first cell also knows how much wireless communication in the second cell would become worse when the at least first updated parameter would be applied in the second cell. The quality feedback may comprise several feedback parameters or even a mathematical quality feedback metric. The quality feedback is not limited to just one quality value for the at least one first updated parameter.

According to embodiments of the invention the second cell determines at least one second updated parameter. This step may also be called problem solution step, because the second cell solves a potentially existing problem in the second cell. The potentially existing problem may for example be caused by the at least one first updated parameter, which has been accepted by the second cell. This is especially advantageous when the expected communication quality in the second cell gets worse when the at least first updated parameter is applied in the second cell. By determining at least one second updated parameter, for example for a third cell, the second cell is able to improve communication quality in the second cell. For example in the case of load balancing parameters, load balancing in the second cell may be affected by the first updated parameter. Then, the second cell determines the at least one second updated parameter for the third cell, which improves load balancing in the second cell. Thus, the step of determining at least one second updated parameter in the second cell is comparable to the step of determining the at least one first updated parameter in the first cell. The second cell may then transmit a third signal to the third cell indicating the at least one second updated parameter. This step is also performed analogously to the step of transmitting the first signal to the second cell. Analogously, the third cell may perform the same steps as the second cell has performed after having received the first signal from the first cell. The method steps performed in the second cell are not completely equal to the method steps performed in the first cell. The second cell merely solves a potentially existing problem in the second cell, while the first cell improves the wireless communication in the first cell and the neighboring cells of the first cell. Hence, the second cell transmits the at least one second updated parameter to the third cell only in case of an existing problem. The problem may for example be interferences between the second and the third cell and/or a handover problem between the second and the third cell. The second cell does not want to improve the overall wireless communication. Therefore, the second cell only considers the own communication quality and not the communication quality in the neighboring cells of the second cell.

According to embodiments of the invention the second cell changes at least one parameter of the plurality of parameters into the at least one first updated parameter. Then, the second cell transmits a third signal to a third cell, wherein the third cell neighbors the second cell. In other words the third signal is indicative of the second updated parameter.

According to embodiments of the invention the first cell knows about the cell IDs and the parameters of the neighbor cells of the first cell and of the neighbor cells' neighbor cells. This is advantageous for transmitting signals from the first cell to any of the neighbor cells or of the neighbor cells' neighbor cells.

In the following some aspects of embodiments of the invention are summarized. The algorithm is running independently inside each base station in a fully distributed way; i.e. there is no central entity. It operates on a semi-static time scale, adapting the cell configurations to the varying traffic load situations. Thus preferably but not mandatorily, at first a static network configuration is carried out, and based on this starting resource configuration, the semi static algorithm then starts to modify the configurations based on the traffic load in the cells. Each cell (or eNB) monitors the traffic load situation, and triggers itself to evaluate/analyse the situation and then possibly to run the resource / parameter (re-)optimization procedure, followed by executing the load balancing actions. Those triggers can be periodically, based on various events, like based on certain load situations, based on certain occurring resource/parameter settings, etc.

The algorithm inside a cell calculates the optimal - or an improved- resource assignment within its local area, including neighbouring cells. These resource assignments could for example be a particular set of handover parameters (towards a particular cell), the Tx power level of the base station and which resources are used or not used for inter-cell interference coordination (i.e. which fractional frequency parts not used by one cell in order to improve the interference situation in a neighbouring cell.)

The calculating cell needs the information about the cells in the area which are affected by the possible actions of the calculations. These may typically be details about its direct neighbours, and also about some information about the surrounding of these direct neighbours in order to be able to propose an action for a neighbour without creating a resource conflict problem for that neighbouring cell. The required information range may be different for particular parameters; for example for ICIC; the knowledge of the ICIC resource status in the second order neighbour cell is needed in order to allow ICIC evaluations for the directly neighbouring cell.

As a result, there is a large amount of different and coupled parameters, which all need to be optimized simultaneously. Furthermore, the optimized parameter settings need to be obtained quickly in a short time scale.

While the mathematical complexity is comparatively simple when performing load balancing by only shifting the cell border between two cells (e.g. via basestation power variation, or via handover parameter adaptation), the complexity increases drastically when combining several techniques simultaneously, i.e. including ICIC. One major challenge is to handle this mathematically on the required short time scale.

With standard techniques, the parameter space is much too large to be able to search for a good solution quickly. E.g. It is not possible to perform e.g. brute force or known backtracking techniques for so many parameters which need to be considered simultaneously. Basically, such problems could not be solved in practical applications because the complexity was too high so that the required computation effort was too large to be feasible.

There is a simplification to treat some groups of parameters separately, i.e. to try to optimize ICIC and handover parameters independently and one after the other. This approach decreases the complexity, maybe it becomes feasible to handle (depends on the concrete scenario), but the problem with this simplification is that all interactions and couplings between the different methods are not taken into account. For example ICIC and handover parameter variation both affect the cell load, and a variation of the parameters in one technique does affect the load status of the cell which then in turn would induces different actions in the other technique and inverse. Thus all techniques should be considered simultaneously and the approach to treat them separately is a severe simplification which is only able to achieve much worse results compared to the needed way to handle the coupled techniques together.

However, it is even a big challenge to solve the single load balancing technique semi static ICIC, as the complexity for this alone is already pretty high. Simulation studies will show, whether this single technique may still be solved without the use of this method: Probably, in easy cell-layout configurations it may be possible, but in difficult situations (which can occur in the real deployment), the normal solving process would need much too long, so that it would even with only the single technique "semi-static ICIC" already necessary to use this technique.

This here presented invention provides a technique, how the number of required parameters can considerably be reduced; a solution now needs to be found only from a much smaller parameter space. This then largely reduces the complexity and it will be possible to treat several techniques simultaneously, which was previously not possible.

As said above, the self organizing load balancing algorithm requires information, e.g. load and parameter settings, from neighbouring cells, and from the second tier neighbouring cells. The information from second tier neighbours are needed because one cell needs to calculate resources for its direct neighbours, resources in the direct neighbours which must not cause any problems in that neighbouring cell; that means that the resources of the direct neighbours must be aligned with the resources of their neighbours (these cells are the second tier neighbouring cells from the first cell).

While it is possible to obtain all these information via inter-basestation signalling, it would be of advantage to limit and restrict the information range as much as possible.

It is much easier to obtain information only from direct neighbours especially as these information are typically such information which are already exchanged anyway. To organize or provide information from more distant neighbour cells, e.g. second tier neighbours, is more effort and if possible that it would be beneficial not having to get such longer distance information. Omitting second tier neighbour information reduces the needed signalling amount/effort and speeds up the information obtaining process, it is now faster to obtain all information.

A small additional aspect of embodiments of the invention: Inside each base station, there needs to be a data storage and data management of those information which are known about the "relevant" neighbour cells. While it is not really a problem to handle more data inside a base station, it is nevertheless nice to have, if the amount of needed information is getting reduced to fewer data. This then simplifies the algorithm implementation and the data storage requirements in our LTE base station product.

In addition to this application here of semi-static load balancing in LTE, this problem to be solved by this invention is more broad. In self organizing networks, there is typically a multitude of parameters which need to be organized and optimized by the systems, and typically these parameters are not only coupled within its own use case but also across use cases. This means, that different use cases influence or control the same system parameters.

Taken the example of LTE, there are SON use cases which address "Handover parameter optimization / Mobility robustness optimization, Load Balancing, Coverage+Capacity Optimization, Energy Saving, .... " all address the radio parameters of the cells. If such use cases would be treated separately, then it may turn out that these different use cases may like modify the same radio parameters in a contradicting and not aligned way. Thus the different use cases are coupled and should be considered together as far as possible. Furthermore, when changing a radio parameter in one cell, then this often has an impact on the neighbouring cells. These example illustrates, that the optimization problem will arrive to become very complex when not studying the SON use cases alone, but when trying to address the challenge to have a working product.

Such challenges require to be able to find the best suited set of parameter configuration while considering simultaneously a multitude of parameters, side conditions and induced effects. Typically, such complex coupling situations cannot be solved mathematically or not in such a way how it is liked to be done. So usually only limited and restricted functionalities are taken - but this does not correspond to for what a solution is searched for.

In order to address this kind of topic, a new EU-funded research project is initiated, which is focussed on the methods and algorithms in self organizing telecommunication networks, including how to optimize such complex systems with many parameters, side conditions and couplings. This project will face the same problem how to handle and solve such scenarios, those problems for which a good solution is provided here in this invention.

So far there exist "only standard techniques" to deal with such complex+coupled problems; this invention here allows to split the problem in a very short range optimization and an "outsourced" "problem resolving procedure" which is located in a neighbouring cell. In this way, the complexity, needed information range, and the amount of couplings to consider simultaneously is reduced. In this way, such problems become solvable or can be treated with a much less effort and/or much better performance (more aspects considered simultaneously).

This invention provides a way how the optimization problem with a multitude of parameters and coupled interactions can be solved. When the algorithm in the cell needs to optimize the situation within the local area, then it formerly needed to operate on the parameters of two tiers of cells. Now, with this invention, introduces the new method to split the parameter solving procedure into a very short range local optimization and a separate, "outsourced" problem resolving step performed by a neighbouring cell.

The centre cell now only operates on a short range of information, only knowing the status of direct neighbours and performs the parameter optimization only within this shorter range with much fewer parameters. This considerably reduces the number of parameters and thus the complexity and allows these complex coupled problems to become solvable.

With this short, limited information range, this centre cell cannot ensure itself, that after invoked changes, everything would be still fine in the surrounding of the neighbouring cell. So the centre cell then sends a message to the neighbour cell to complete the optimization procedure, i.e. to let the neighbour cell check or verify that after these (potential) changes, everything is still fine in its surrounding and if not that then the neighbour cell itself starts a local "problem resolving" procedure. Note that this problem resolving procedure is not the complete resource optimization around that neighbouring cell, here it is only resolves any maybe induced problems. Optionally, there is the possibility for different types of commands and feedback message loop(s) between the centre cell and the neighbouring cells for further algorithm refinement in the case of very difficult resource assignment situations.

This technique is intended to be used in our LTE basestations to be able to realize the self organizing use case load balancing, but this idea is not restricted to SON/LTE, it is pretty generic and could be used in several applications, especially in self organizing applications like in several SON use cases, i.e. when their mutual interactions are also considered. Concretely, the planed EU-funded project UNIVERSELF will face the same issue as here for other self-organizing use cases, where many coupled parameters will need to be optimized.

This invention provides a way how the resource assignment and optimization problem with a multitude of parameters and coupled interactions can be solved; it reduces the number parameters which need to be handled simultaneously and it reduces the required information range. Thereby this technique manages to solve problems which were formerly too complex to be handled.

This technique is pretty generic. For example in self organizing systems ,like e.g. self organizing (radio) networks, there is often a multitude of coupled parameters to be considered and the technique of this invention could there be very useful. Concretely, this invention is outlined at the example of semi-static load balancing in LTE, where the applicant's strategy is to carry out powerful load balancing using both, inter-cell interference coordination and handover parameter variation. The distributed SON algorithms run distributed in every cell, where each cell needs to calculate the optimal (or best suited/possible) parameter combination, having to considering the parameter settings to all neighbour cells and also the settings of second tier neighbour cells; more details about the algorithm, side-conditions, and couplings can be found description above and in the provided references. This coupled multi-parameter optimization problem is not solvable (within a reasonably amount of time and when using standard techniques).

This invention here introduces the a method, which provides the technique which allows to reduce the parameter+information range which needs to be solved simultaneously. Thereby it 1) reduce the number of parameters among which the best suited solution needs to be found and 2) it reduces the required information range which needs to be obtained via signalling and based on which the algorithm is operating. Via those reductions, the formerly too complex problem now becomes solveable. In the following it is described at the example of semi-static load balancing in LTE: Within this method, the cell, which runs the local area resource optimization algorithm searches the parameter space only within a restricted surrounding area, in a minimal short range area which is considerably smaller than it previously had to be. It searches the parameter space for the best suited parameter combination only while potentially varying -in this LTE load balancing example- its own Tx power, the handover parameters towards its directly neighbouring cells, and the ICIC parameters which affect this cell directly. Without this method much more parameters from the first and second tier of cells had to be considered and/or optimized simultaneously. So a solution to this very short range optimization procedure can be found very quickly with only little computation effort.

However, this search is carried out considering only a very small area and does not has (or does not use) any information from second tier cells that means any long range effects are not taken into account. Thus, this short range procedure in the centre cell cannot ensure that after potential changes the situation would still be very fine also for the neighbouring cells.

For example, when the ICIC resources change, then this can require a longer range re-organization of the ICIC resources; in particular a neighbouring cell can be affected and must adapt to the new ICIC situation towards its neighbours. Furthermore, when a neighbouring cell e.g. accepts some load from the centre cell, e.g. via HO parameter modifications, then this neighbouring cell may need to evaluate, whether it should then adapt e.g. its HO parameter towards other neighbouring cells to handle the new traffic situation.

In this method, the centre cell only calculates an improvement for its very close area, and then it informs all the possibly affected neighbouring cells, that they should check the situation and - if needed- resolve any emerging problematic situations. So the neighbouring cells complete the resource optimization procedure which has been started by the centre cell. Thereby, the neighbouring cells (possibly) only carry out the most urgent actions, i.e. to resolve maybe occurring resource conflicts. In particular, the neighbouring cells do not itself start a new load balancing optimization sequence at this moment.Somewhen later, that neighbouring cell will start as a new centre cell the load balancing procedure, and then this cell will optimize its situation.

The restriction, that the neighbouring cells only complete that procedure started by the centre cell, helps to avoid that maybe a change proceeds from cell to cell. Anyway, the algorithm will contain further functionalities to ensure stability, to avoid ping pongs and to avoid moving waves of changes.

Optionally, but not necessarily, there may be a feedback loop back from the neighbouring cell, e.g. that the resource coordination in the neighbouring cell was successful or that there would remain a "sub-optimal" situation. This feedback could optionally be given with more detailed information, e.g. a rating, so that the centre cell may then consider this feedback in its actions, i.e. whether to insist on that previously proposed change or whether to propose an alternative modification.

There are several options how this feedback cycle can be realized, the initial message from the centre cell to the neighbour cell may be
1) a command,
2) a suggestion or
3) an inquiry;
more details are given below in the signalling paragraph and in the attached drawings.

By this method the complexity is largely reduced and an optimal resource parameter assignment can be found mathematically in a sufficiently short amount of time. Furthermore, and this may be the decisive advantage, this method does only need very short range knowledge of the surrounding, i.e. it does not need such a long range knowledge as it would be required when the centre cell does already ensure in its algorithm, that any action involving a neighbouring cell would not create any problems in that neighbouring cell.

In addition to the signalling already defined by the general load balancing SON algorithm, i.e. load information exchange, and load balancing parameter setting exchange, the following signalling messages are needed for this approach:
1) A command/suggestion/inquiry message from the centre cell to another (i.e. a neighbour) cell, that this cell shall carry out the second step, to check for and if needed then resolve any "sub-optimal" resource arrangements within its own surrounding.
   Depending on the implementation with the feedback loop below, this message may either be
   a) a command which the neighbour cell should follow (no feedback message expected)
   b) a suggestion which may directly be applied if everything is very fine, or which is not directly applied and when the neighbour cell then sends a feedback message back with a kind of rating
   c) only an inquiry where no parameter change is expected and where the centre cell likes to receive the feedback message because it would like to evaluate particular candidate parameter settings.
2) Optionally a feedback message back from the neighbour cell to the centre cell
   This feedback message may report success or it may report a kind of quality rating back (or with more detailed information). For example the neighbour cell could tell the source cell that she can resolve any resource assignment conflicts within its own local area with this reported particular quality (e.g. interference level and/or load distribution quality, or ...)
   Then this centre cell could consider this feedback to either insist on this initially proposed resource changes (sends a command), or to propose something different (new suggestion) . For example for ICIC there may be more than one equally possible "colours", and then the centre cell could propose the other colour to the neighbouring cell. As another alternative, the centre cell may suggest another way, maybe involving another neighbour, to improve the load balancing situation.

This invention allows to reduce the complexity and the needed information range in multi parameter optimization problems across several involved entities. Via this technique the computation- and signalling effort is largely reduced. Certain problems, e.g. advanced LTE SON load balancing, become now to be solvable, which could not be handled before.

It is a generic technique for algorithms in complex, coupled multi-parameter optimizations which is useful or necessary in several applications, i.e. in self-organizing networks.

In another aspect the invention relates to a computer readable storage medium containing instructions that when executed by a base station apparatus of a wireless communication network cause the base station to perform a method for adapting a plurality of parameters. The method comprises the steps of calculating at least one first and one second updated parameter of the plurality of parameters. Transmitting a first signal to another base station, the first signal being indicative of the at least one first and the at one second updated parameter. Receiving a second signal from the other base station, the second signal being indicative of whether the second base station agrees to the at least one first and the at least one second updated parameter or not.

In another aspect the invention relates to a computer readable storage medium containing instructions that when executed by a base station apparatus of a wireless communication network cause the base station to perform a method for adapting a plurality of parameters. The method comprises a first step of receiving a first signal from another base station, the first signal being indicative of at least one first and at least one second updated parameter. In a second step it is determined, if the at least one second updated parameter would affect wireless communication more than a first threshold value. And in a third step a second signal is transmitted to the other base station, the second signal being indicative of whether the other base station shall use the at least one first updated parameter or not.

In another aspect the invention relates to a base station apparatus comprising means for calculating at least one first updated parameter of the plurality of parameters, means for transmitting a first signal to another base station, the first signal being indicative of the at least one first updated parameter, and means for receiving a second signal from the other base station, the second signal being indicative of whether the second base station agrees to the at least one first updated parameter or not.

In yet another aspect the invention relates to a base station apparatus comprising means for receiving a first signal from another base station, the first signal being indicative of at least one first updated parameter, means for determining if the at least one first updated parameter would affect wireless communication more than a first threshold value, and means for transmitting a second signal to the other base station, the second signal being indicative of whether the other base station shall use the at least one first updated parameter or not.

### Brief description of the drawings

In the following preferred embodiments of the invention will be described, by way of example only, and with reference to the drawings in which:
- Figure 1: is a block diagram showing the communication of a first center cell with a neighboring second cell;
- Figure 2: is a schematic view showing method steps according to embodiments of the invention, wherein a first cell sends a command to a second cell to accept new resource parameters;
- Figure 3: is a schematic view of method steps according to embodiments of the invention, wherein a first cell sends a suggestion for new resource assignments to a second cell;
- Figure 4: is a schematic view of an embodiment of the invention, wherein a first cell sends an inquiry about the quality for a particular resource assignment to a second cell;

- Figure 5: is a block diagram of a wireless communication system with two base stations adapted to perform a method according to embodiments of the invention; and
- Figure 6: is a flow diagram of an embodiment of the invention.

### Detailed description

Like numbered elements in these figures are either identical elements or perform the same function. Elements which have been discussed previously will not necessarily be discussed in later Figs. if the function is identical.

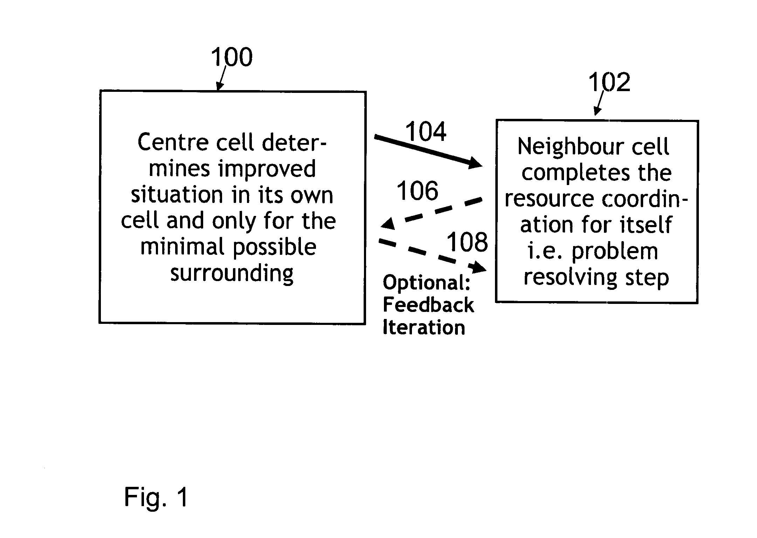

Fig. 1 is a schematic view of a first cell 100 and a second cell 102 in a wireless communication network (not depicted). The first cell 100 is the center cell. The second cell 102 is the neighbor cell of the center cell 100. The first cell 100 determines an improved situation in its own cell and for the minimal possible surrounding. The minimal possible surrounding comprises at least the second cell 102, alternatively the minimal possible surrounding may also comprise every neighboring cell or even every neighboring cell of the neighboring cells of the first cell 100. The improved situation in the first cell 100 may be linked to at least one first updated parameter to be applied in the second cell 102. In case of load balancing parameters the first cell 100 for example determines two or three load balancing parameters in cell 102 to be changed for improving the wireless communication situation in cell 100 and for the minimal possible surrounding, which may be for example be cell 102 and optionally at least one further cell. The at least one first updated parameter is transmitted from the first cell 100 to the second cell 102 by a first signal 104. The second cell 102 then completes the resource coordination for itself. This step is also referred to as problem resolving step. In this step the cell 102 determines how the first updated parameter would have an impact to the wireless communication in the second cell 102. If the at least one first updated parameter would have an impact to the wireless communication in cell 102, the base station of cell 102 determines how big this impact would be, this means that the cell 102 determines how much the quality of wireless communication would get worse when the at least one first updated parameter would be applied.

The first cell 100 and the second cell 102 optionally transmit further signals for feedback from the second cell 102 to the at least one first updated parameter determined by first cell 100. Therefore further signals 106, 108 may be exchanged between first cell 100 and second cell 102. These signals for example comprise a quality value, the quality value being indicative of how much the at least one first updated parameter would affect wireless communication in the second cell 102 if the at least one first updated parameter would be applied in second cell 102.

The first cell 100 may follow the determination of cell 102 regarding if the at least one first updated parameter is applied in second cell 102. Optionally, the first cell 100 is adapted to force the second cell 102 to apply the at least one first updated parameter, the step of forcing cell 102 to apply the at least one first updated parameter may for example be performed by transmitting signal 108.

If it is determined that cell 102 shall apply the at least one first updated parameter - wherein it does not matter whether cell 102 decided to agree to the at least one first updated parameter or cell 100 forced cell 102 to apply the at least one first parameter - the second cell 102 calculates an improved situation for wireless communication in the second cell 102 and optionally also for the minimal possible surrounding of cell 102. The minimal possible surrounding is defined for cell 102 in the same way as for the first cell 100. In other words, in response to applying the at least one first updated parameter the second cell 102 determines at least one second updated parameter, which for example shall be applied in a third cell (not depicted). Then, the method according to embodiments of the invention start again with the second cell 102 being the center cell and the third cell being the neighbor cell.

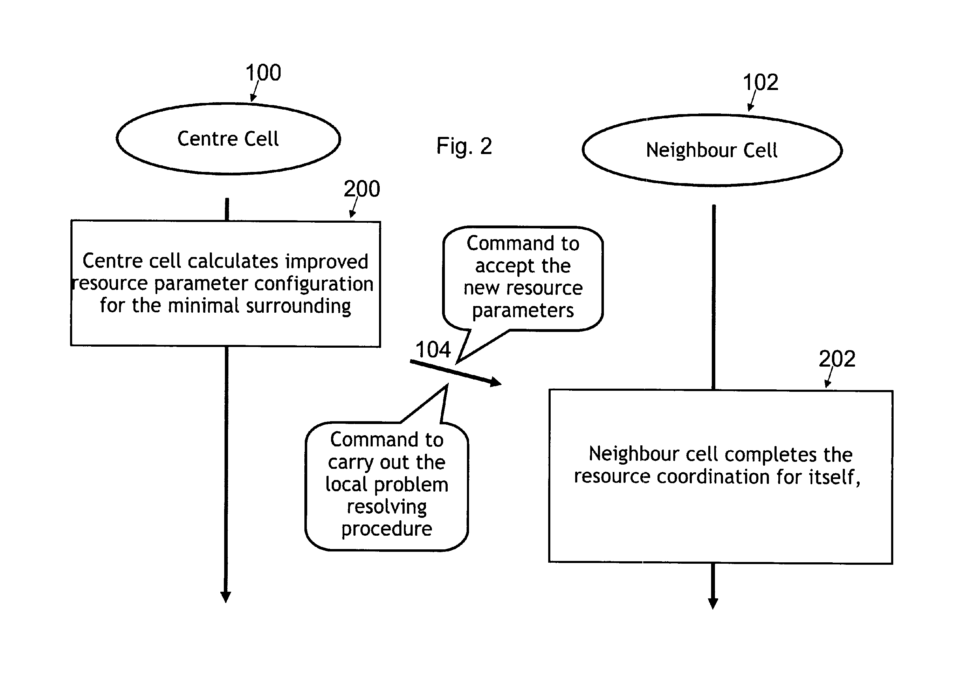

Fig. 2 is a schematic view of the first cell 100 and the second cell 102 performing method steps according to embodiments of the invention. The first cell 100 is also referred to as the center cell and calculates an improved resource parameter configuration within a small local area, for example a sub-area of the wireless communication network. The sub-area of the wireless telecommunication network may also be referred to as the minimal surrounding of center cell 102, which is explained above in the description for Fig. 1. This is performed in the first step 200. The result of the calculation of the improved resource parameter configuration is at least one first updated parameter. This at least one first updated parameter is transmitted to second cell 102 by a signal 104. The signal 104 is indicative of a command to accept the new resource parameters and to carry out the local problem resolving procedure.

After having received the signal 104 the second cell 102 completes the resource coordination for cell 102 in step 202. This means that the base station of cell 102 determines how wireless communication in cell 102 and within its surrounding would be affected if the at least one first updated parameter would be applied in cell 102. Additionally, the base station of cell 102 may also calculate or in other words simulate at least one second updated parameter, with which the communication situation in cell 102 and within its surrounding would be improved in comparison to only the first updated parameter. In other words, cell 102 determines at least one further updated parameter. This at least one further updated parameter would improve the wireless communication in cell 102 and within its surrounding, if it would be applied together with the at least one first updated parameter. The at least one further updated parameter may be a parameter dedicated to be applied in cell 102 or in a cell in the vicinity of cell 102. Alternatively the at least one further updated parameter may also be applied in a third cell (not depicted).

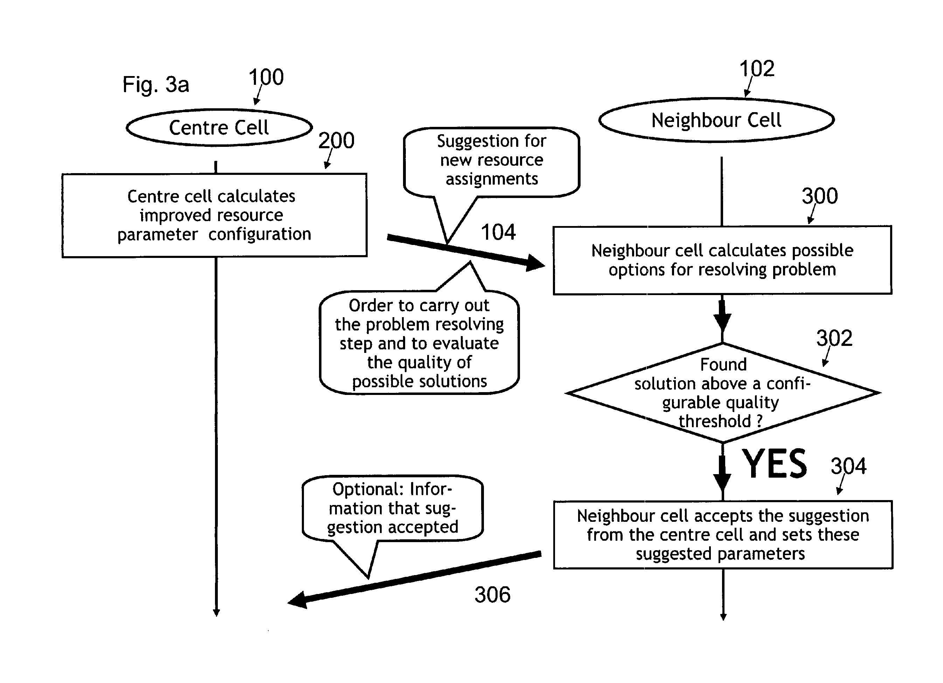

Fig. 3a is a schematic view of a first cell 100 and a second cell 102 performing method steps according to embodiments of the invention. The first cell 100 calculates an improved resource parameter configuration as explained above in the description for Fig. 2. In a first signal 104 a suggestion for new resource assignments is made to neighbor cell 102. It is important that in this embodiment the first signal 104 comprises only a suggestion for the new resource assignments and not a command to accept new resource parameters. The new resource assignments may comprise at least one first updated parameter. Naturally, the new resource assignments may also comprise more than one first updated parameter. For example, a second updated parameter for the second cell may also be suggested. First signal 104 further comprises an order to carry out the problem resolving step and to evaluate the quality of possible solutions. In other words the first cell 100 tells the second cell 102 to carry out the problem solving step and - optionally also - to give a feedback about the quality of wireless communication in cell 102 and/or within the vicinity of cell 102 when the at least one first updated parameter and/or second updated parameter would be applied in the respective cells.

After having received the first signal 104 cell 102 calculates possible options for resolving the problem of reduced communication quality, e.g. problematic or conflicting parameter configurations, in cell 102 and within its surrounding if the at least one first updated parameter and/or second updated parameters would be applied in the respective cells. This is performed in step 300.

In step 302 a determination is made if a solution is found that lies above a configurable quality threshold. The configurable quality threshold may for example be calculated according to a mathematical metric. In other words the quality threshold is defined before the first cell 100 transmits the first signal to the second cell 102 and the second cell 102 compares after having received the first signal 104 if any newly calculated parameter configuration would result in a quality of wireless communication in the second cell 102 above the configurable quality threshold. Each newly calculated parameter configuration in cell 102 may also comprise second updated parameters, which are dedicated to be applied in any other cell of the wireless communication network in the vicinity of cell 102. This means the second cell 102 also considers parameter configurations in neighboring cells of the second cell 102 or even of neighboring cells of the neighboring cells of cell 102.

In Fig. 3a the parameter configuration found by second cell 102 would result in a wireless communication quality above the configurable quality threshold. Then the second cell 102 accepts the suggestion from the center cell and sets the at least one first updated parameter in step 304. This acceptance may involve that within the problem resolving step in this second cell, a further parameter in a third cell has been adapted within the problem-resolving solution which the second cell had determined. Within this procedure, the second cell had send a signal (not show in the figure) to a third cell (not shown in the figure) indicating that a parameter change in this third cell is orderd, suggested or inquired. Optionally a further signal 306 is transmitted to the first cell 100, the further signal being indicative of the fact that the suggestion has been accepted or rejected. This signal from the second to the first cell may optionally also contain a quality feedback about the previous, installed and/or evaluated parameter configurations.

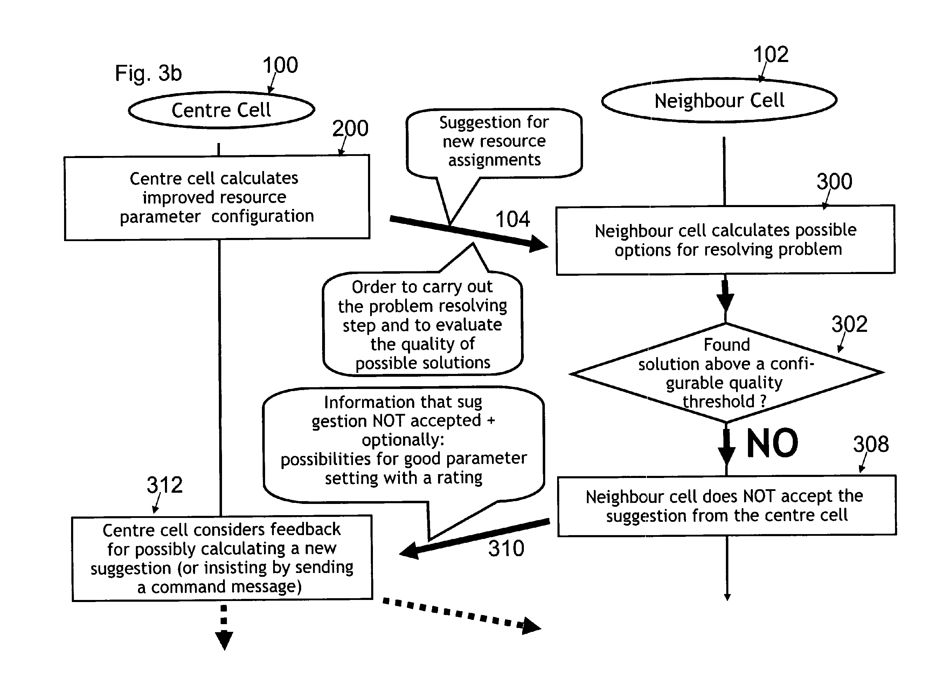

Fig. 3b is a schematic view of the first cell 100 and the second cell 102 performing a method according to embodiments of the invention, which is comparable to Fig. 3a. the main difference is that the parameter configuration found by second cell 102 in step 300 results in a wireless communication quality below the quality threshold. Consequently the second cell 102 does not accept the suggestion transmitted from the first cell 100 via first signal 104 to second cell 102 in step 308.

Signal 310 is transmitted from second cell 102 to first cell 100, signal 310 being indicative of the fact that the suggestion transmitted from first cell 100 to second cell 102 via first signal 104 is not accepted by the second cell 102. Optionally a quality rating is comprised by signal 310 for the parameter configuration suggested by first cell 100 to second cell 102 and for additional parameter configurations in second cell 102 determined by second cell 102.

In step 312 the first cell 100 considers the feedback received from second cell 102 via signal 310. Then a new suggestion may be transmitted to second cell 102 from first cell 100 or second cell 102 is forced by first cell 100 to accept the suggestion transmitted via first signal 104 to second cell 102.

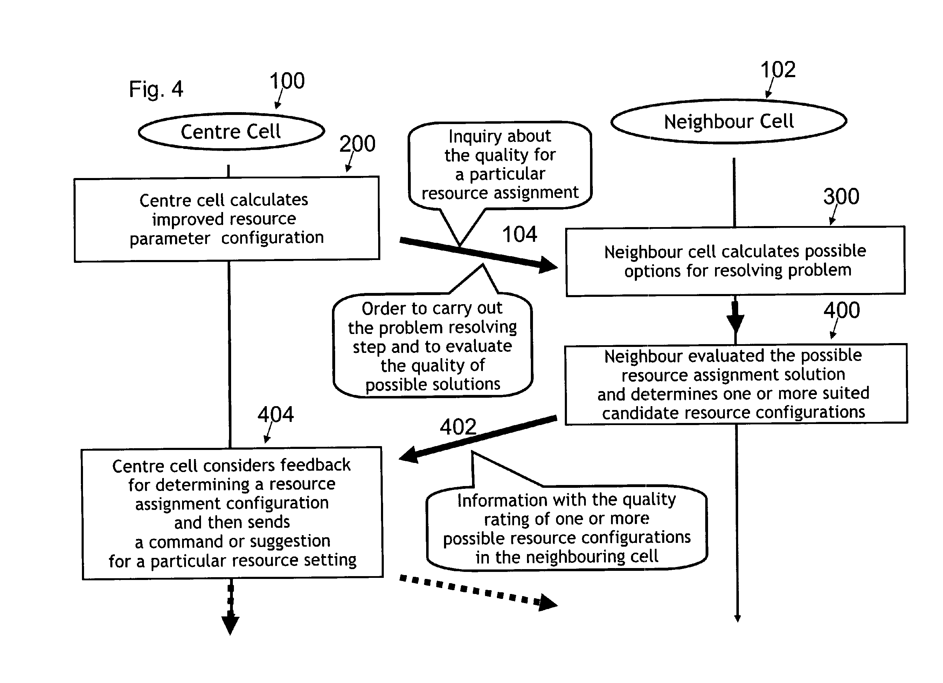

Fig. 4 is a schematic view of a first cell 100 and a second cell 102 performing method steps according to embodiments of the invention. The main difference to Figs. 3a and 3b is that first cell 100 transmits via signal 104 just an enquiry about the quality for a particular resource assignment. This means that the first cell 100 wants the second cell 102 just to calculate how much a particular parameter configuration would affect communication quality in cell 102. Cell 102 then calculates as in Figs. 3a and b in step 300 the possible options for resolving the problem. In other words, in step 300 the second cell 102 determines how further parameters may be updated in response to the at least one first updated parameter received in first signal 104 from first cell 100.

Alternatively, the second cell 102 may determine, that no serious problem exists in cell 102 when applying the updated parameter. In this case, the second cell 102 accepts the suggested parameters inside its cell, no parameter changes in a third cell are needed, and the second cell 102 does optionally report a quality feedback of the parameter configuration back to the first cell 100.

In step 400 cell 102 has evaluated the possible resource assignment solution and has determined one or more suited candidate resource configurations. These candidate resource configurations are transmitted via signal 402 to first cell 100 with a quality value for each configuration. Thus, the first cell 100 knows the best possible resource configuration in cell 102 comprising the at least one first updated parameter.

In step 404 first cell 100 considers the feedback received by signal 402 from second cell 102 for determining a resource assignment configuration, which then will be transmitted to the second cell 102 in a further method step (not depicted).

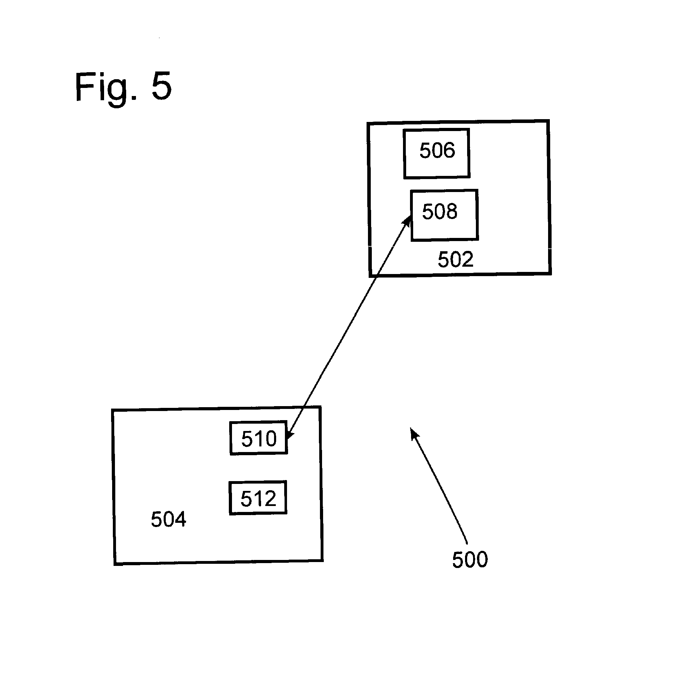

Fig. 5 is a block diagram of a wireless communication system 500 with a first base station 502 of a first cell and a second base station 504 of a second cell. The first base station comprises a processor 506, where the at least one first updated parameter is calculated. Further the first base station 502 comprises transmission means 508, which may for example be an interface such as an X2 interface. Interface 508 is used to transmit the first signal to the second base station. The interface 508 is further adapted for receiving signals from the second base station.

The second base station 504 comprises an interface 510, which may also for example be an X2 interface. Via interface 510 signals may be received from the first base station and transmitted to the first base station 502. Further, the second base station 504 comprises a processor 512, which is adapted to determine if the at least one first updated parameter would affect wireless communication more than a first threshold. Further, processor 512 is adapted to perform quality ratings for any parameter configuration suggested by first base station 502. Additionally, processor 512 is adapted to determine further updated parameters, which may be applied in the second cell or in any other cell of the wireless communication network 500. It is to be noted that the wireless communication network 500 may comprise more base stations than depicted in Fig. 5. In general, the processor 512 is adapted to perform any method step performed inside the second base station 504.

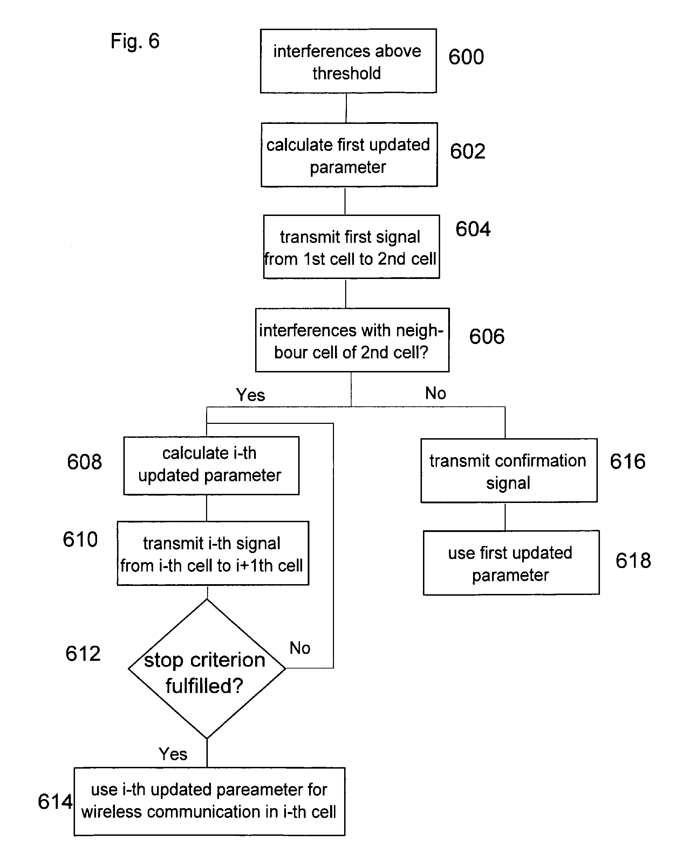

Fig. 6 is a flow diagram of a method, the method comprising the following steps:
- the first cell determines (600) that interferences with the second cell are above a first interference threshold;
- the at least one first updated parameter is calculated (602) by the first cell, wherein the at least one first updated parameter decreases interferences with the second cell, when the at least one first updated parameter is used for wireless communication in the first cell;
- the second cell determines (606) if interferences with a neighbouring cell of the second cell would exceed a second interference threshold, after the second cell has received the first signal;
- if so,
   o the second cell calculates (608) a second updated parameter, wherein the second updated parameter decreases interferences with neighbouring cell of the second cell, when the at least one first updated parameter is used for wireless communication in the second cell;
   o the second cell transmits (610) a second signal to a third cell, the second signal being indicative of the second updated parameter;
   o the method steps of calculating an i-th updated parameter in an i-th cell and transmitting an i-th signal to an i+1-th cell are performed until a stop criterion is fulfilled (612);
   o the i-th updated parameter is used for wireless communication in the i-th cell (614), if the i+1-th cell has accepted the use of the i-th updated parameter in the i-th cell;
- else
   o the second cell transmits (616) a confirmation signal to the first cell, the confirmation signal being indicative of the second cell accepting the use of the at least one first updated parameter in the first cell for wireless communication; and
   o using (618) the at least one first updated parameter in the first cell for wireless communication.

The stop criterion may for example be a limitation of i. For example, i may only run up to 2, which means that only the at least one first updated parameter in the first cell and the second updated parameter in the second cell are calculated. Another example for a stop criterion would be, that the i+1-th cell has accepted the i-th updated parameter without calculating an i+1th updated parameter.

For example, the acceptance probability increases for an increasing i. A higher acceptance probability here means that it is more likely that a cell accepts the updated parameter of a neighbouring cell. This means, that for an increasing i the probability of calculating an i+1-th updated parameter decreases.

### List of reference numerals

| | |
|---|---|
| 100 | First cell |
| 102 | Second cell |
| 104 | First signal |
| 106 | Further signal |
| 108 | Further signal |
| 200 | First cell calculating improved configuration |
| 202 | Determination how communication would be affected |
| 300 | Calculate possible solutions |
| 302 | Found appropriate solution? |
| 304 | Accept suggestion |
| 306 | Information of accepting suggestion |
| 308 | Not accept suggestion |
| 310 | Signal |
| 400 | Determined candidate resource configurations |
| 402 | Signal |
| 404 | Consider feedback |
| 500 | wireless communication system |
| 502 | First base station |
| 504 | Second base station |
| 506 | Processor |
| 508 | Interface |
| 510 | Interface |
| 512 | Processor |

## Claims

1. A method for adapting a plurality of parameters in a first (100) and a second (102) cell of a wireless communication network, wherein the first cell neighbours the second cell, and wherein the method comprises the following steps:
- calculating (200) at least one first updated parameter of the plurality of parameters of the wireless communication network;
- transmitting a first signal (104; 604) from the first cell to the second cell, the first signal being indicative of the at least one first updated parameter;
- determining (302) if the at least one first updated parameter would affect wireless communication in the second cell more than a first threshold value; and
- transmitting a second signal (106; 306; 402) from the second cell to the first cell, the second signal being indicative of whether the second cell accepts using the at least one first updated parameter for wireless communication or not.

2. Method according to claim 1, wherein the parameters are load balancing parameters, the load balancing parameters being handover parameters, base station transmission power, and/or interference coordination parameters, wherein the first cell determines a set of load balancing parameters in the first cell and the neighbouring cells of the first cell, the set of load balancing parameters comprising the at least one first updated parameter, wherein the set of load balancing parameters is used in the first cell and the neighbouring cells of the first cell for wireless communication, wherein using the set of load balancing parameters decreases interferences and/or increases data throughput at least in the first cell, and wherein the second cell determines at least one second updated parameter, the at least one second updated parameter is used in second cell for wireless communication, wherein using the at least one second parameter in the second cell decreases interferences and/or increases data throughput at least in the second cell.

3. Method according to claim 1, wherein:
- the first cell determines (600) that interferences with the second cell are above a first interference threshold;
- the at least one first updated parameter is calculated (602) by the first cell, wherein the at least one first updated parameter decreases interferences with the second cell, when the at least one first updated parameter is used for wireless communication in the first cell;
- the second cell determines (606) if interferences with a neighbouring cell of the second cell would exceed a second interference threshold, after the second cell has received the first signal;
- if so,
o the second cell calculates (608) a second updated parameter, wherein the second updated parameter decreases interferences with neighbouring cell of the second cell, when the at least one first updated parameter is used for wireless communication in the second cell;
o the second cell transmits (610) a second signal to a third cell, the second signal being indicative of the second updated parameter;
o the method steps of calculating an i-th updated parameter in an i-th cell and transmitting an i-th signal to an i+1-th cell are performed until a stop criterion is fulfilled (612);
o the i-th updated parameter is used for wireless communication in the i-th cell (614), if the i+1-th cell has accepted the use of the i-th updated parameter in the i-th cell;
- else
o the second cell transmits (616) a confirmation signal to the first cell, the confirmation signal being indicative of the second cell accepting the use of the at least one first updated parameter in the first cell for wireless communication; and
o using (618) the at least one first updated parameter in the first cell for wireless communication.

4. Method according to any one of the preceding claims, wherein the second signal is indicative of the second cell accepting to use the at least one first updated parameter for wireless communication in the second cell, and wherein the second cell changes at least one parameter of the plurality of parameters into the at least one first updated parameter.

5. Method according to claim 1, wherein the second signal is indicative of the second cell not accepting to use the at least one first updated parameter for wireless communication in the second cell.

6. Method according to claim 1, wherein the second signal is indicative of a quality feedback, the quality feedback indicating to the first cell how the at least one first updated parameter would affect wireless communication in the second cell.

7. Method according to claim 5, wherein the second cell changes at least one parameter of the plurality of parameters into the at least one first updated parameter, and wherein the second cell transmits a third signal to a third cell, wherein the third cell neighbours the second cell, the third signal being indicative of the second updated parameter.

8. Method according to any one of the preceding claims, wherein the first cell has a data storage for storing the cell IDs and the parameters of the neighbour cells of the first cell and of the neighbour cells' neighbour cells.

9. A computer-readable storage medium containing instructions that when executed by a base station apparatus of a wireless communication network cause the base station to perform a method for adapting a plurality of parameters, the method comprising:
- calculating at least one first updated parameter of the plurality of parameters of the wireless communication network;
- transmitting a first signal to another base station, the first signal being indicative of the at least one first updated parameter; and
- receiving a second signal from the other base station, the second signal being indicative of whether the second base station agrees to the at least one first updated parameter or not.

10. A computer-readable storage medium containing instructions that when executed by a base station apparatus of a wireless communication network cause the base station to perform a method for adapting a plurality of parameters, the method comprising:
- receiving a first signal from another base station, the first signal being indicative of at least one first updated parameter;
- determining if the at least one first updated parameter would affect wireless communication more than a first threshold value; and
- transmitting a second signal to the other base station, the second signal being indicative of whether the other base station shall use the at least one first updated parameter or not.

11. A base station apparatus of a cell in a wireless communication network, the base station apparatus comprising:
- means for calculating (506; 512) at least one first updated parameter of the plurality of parameters;
- means for transmitting (508; 510) a first signal to another base station, the first signal being indicative of the at least one first updated parameter; and
- means for receiving (508; 510) a second signal from the other base station, the second signal being indicative of whether the second base station agrees to the at least one first updated parameter or not.

12. A base station apparatus of a cell in a wireless communication network, the base station apparatus comprising:
- means for receiving (508; 510) a first signal from another base station, the first signal being indicative of at least one first updated parameter;
- means for determining (506; 512) if the at least one first updated parameter would affect wireless communication more than a first threshold value; and
- means for transmitting (508; 510) a second signal to the other base station, the second signal being indicative of whether the other base station shall use the at least one first updated parameter or not.

13. A wireless communication system comprising at least one first base station according to claim 11 and at least one second base station according to claim 12, wherein the at least one first base station and the at least one second base station are adapted to perform a method according to any one of the claims 1-8.

## Amended claims

### Amended claims in accordance with Rule 137(2) EPC.

**1.** A method for adapting a plurality of parameters in a first (100) and a second (102) cell of a wireless communication network, wherein the first cell neighbours the second cell, wherein the first cell determines (600) that interferences with the second cell are above a first interference threshold, and wherein the method comprises the following steps:
- calculating (200) at least one first updated parameter of the plurality of parameters of the wireless communication network by the first cell, wherein the at least one first updated parameter decreases interferences with the second cell, when the at least one first updated parameter is used for wireless communication in the first cell;
- transmitting a first signal (104; 604) from the first cell to the second cell, the first signal being indicative of the at least one first updated parameter; and
- determining (302) if the at least one first updated parameter would affect wireless communication in the second cell more than a first threshold value;
- if so,
o the second cell calculates (608) a second updated parameter, wherein the second updated parameter decreases interferences with neighbouring cells of the second cell, when the at least one first updated parameter is used for wireless communication in the second cell;
o the second cell transmits (610) a second signal to a third cell, the second signal being indicative of the second updated parameter;
o the method steps of calculating an i-th updated parameter in an i-th cell and transmitting an i-th signal to an i+1-th cell are performed until a stop criterion Is fulfilled (612);
o the i-th updated parameter is used for wireless communication in the i-th cell (614), if the i+1-th cell has accepted the use of the i-th updated parameter in the i-th cell;
- else
o the second cell transmits (616) a confirmation signal to the first cell, the confirmation signal being indicative of the second cell accepting the use of the at least one first updated parameter in the first cell for wireless communication; and
o using (618) the at least one first updated parameter in the first cell for wireless communication..

**2.** Method according to claim 1, wherein the parameters are load balancing parameters, the load balancing parameters being handover parameters, base station transmission power, and/or interference coordination parameters, wherein the first cell determines a set of load balancing parameters in the first cell and the neighbouring cells of the first cell, the set of load balancing parameters comprising the at least one first updated parameter, wherein the set of load balancing parameters is used in the first cell and the neighbouring cells of the first cell for wireless communication, wherein using the set of load balancing parameters decreases interferences and/or increases data throughput at least In the first cell, and wherein the second cell determines at least one second updated parameter, the at least one second updated parameter is used in second cell for wireless communication, wherein using the at least one second parameter in the second cell decreases interferences and/or increases data throughput at least in the second cell.

**3.** Method according to claim 1, wherein the second signal is indicative of a quality feedback, the quality feedback indicating to the first cell how the at least one first updated parameter would affect wireless communication in the second cell.

**4.** Method according to claim 1, wherein the second cell changes at least one parameter of the plurality of parameters into the at least one first updated parameter, and wherein the second cell transmits a third signal to a third cell, wherein the third cell neighbours the second cell, the third signal being indicative of the second updated parameter.

**5.** Method according to any one of the preceding claims, wherein the first cell has a data storage for storing the cell IDs and the parameters of the neighbour cells of the first cell and of the neighbour cells' neighbour cells.

**6.** A computer-readable storage medium containing instructions that when executed by a base station apparatus of a wireless communication network cause the base station to perform a method for adapting a plurality of parameters, the method comprising:
- calculating at least one first updated parameter of the plurality of parameters of the wireless communication network, wherein the at least one first updated parameter decreases interferences with a neighbouring cell, when the at least one first updated parameter is used for wireless communication in a first cell by the base station apparatus;
- transmitting a first signal to the base station of the neighbouring cell, the first signal being indicative of the at least one first updated parameter; and
- receiving a second signal from the base station of the neighbouring cell, the second signal being indicative of whether the base station of the neighbouring cell agrees to the at least one first updated parameter or not.

**7.** A computer-readable storage medium containing instructions that when executed by a base station apparatus of a wireless communication network cause the base station to perform a method for adapting a plurality of parameters, the method comprising:
- receiving a first signal from another base station, the first signal being indicative of at least one first updated parameter; and
- determining if the at least one first updated parameter would affect wireless communication more than a first threshold value;
- if so,
o the calculating (608) a second updated parameter, wherein the second updated parameter decreases interferences with a neighbouring cell, when the at least one first updated parameter is used for wireless communication;
o transmitting (610) a second signal to a further base station, the second signal being indicative of the second updated parameter;
- else
o transmitting (616) a confirmation signal to the other base station, the confirmation signal being indicative of accepting the use of the at least one first updated parameter by the other base station for wireless communication..

**8.** A base station apparatus of a cell in a wireless communication network, the base station apparatus comprising:
- means for calculating (506; 512) at least one first updated parameter of the plurality of parameters, wherein the at least one first updated parameter decreases interferences with a neighbouring cell, when the at least one first updated parameter is used for wireless communication In a first cell by the base station apparatus;
- means for transmitting (508; 510) a first signal to the base station of the neighbouring cell, the first signal being indicative of the at least one first updated parameter; and
- means for receiving (508; 510) a second signal from the base station of the neighbouring cell, the second signal being indicative of whether the base station of the neighbouring cell agrees to the at least one first updated parameter or not.

**9.** A base station apparatus of a cell in a wireless communication network, the base station apparatus comprising :
- means for receiving (508; 510) a first signal from another base station, the first signal being indicative of at least one first updated parameter;
- means for determining (506; 512) if the at least one first updated parameter would affect wireless communication more than a first threshold value;
- means for calculating (608) a second updated parameter, wherein the second updated parameter decreases interferences with a neighbouring cell, when the at least one first updated parameter is used for wireless communication;
- means for transmitting (610) a second signal to a further base station, the second signal being indicative of the second updated parameter;
- means for transmitting (616) a confirmation signal to the other base station, the confirmation signal being indicative of accepting the use of the at least one first updated parameter by the other base station for wireless communication.

**10.** A wireless communication system comprising at least one first base station according to claim 8 and at least one second base station according to claim 9, wherein the at least one first base station and the at least one second base station are adapted to perform a method according to any one of the claims 1-5.
